# EUROPÄISCHE PATENTSCHRIFT

(11) **EP 1 052 662 B1**
(45) Veröffentlichungstag und Bekanntmachung des Hinweises auf die Patenterteilung: **01.10.2003**
(21) Anmeldenummer: 00109368.1
(22) Anmeldetag: 02.05.2000
(51) Int. Cl.: H01H 1/36, H02J 7/00

(54) **Schalter für Fahrzeuge**
Switch for vehicles
Interrupteur pour véhicules

(30) Priorität: 14.05.1999 DE 19922330
(43) Veröffentlichungstag der Anmeldung: 15.11.2000
(73) Patentinhaber: Delphi Technologies, Inc., Troy, MI 48007 (US)
(72) Erfinder: Dr. Rer. Nat. Blessing, Alf, 73902 Heiningen (DE); Loewel, Andreas, Dipl.-Ing., 60528 Frankfurt (DE); Rohde, Wolfgang, 71067 Sindelfingen (DE); Schulz, Thomas, Dipl.-Ing., 72669 Unterensingen (DE); Seyer, Rheinhard, Dipl.-Ing., 63110 Rodgau (DE); Alksnat, Holger, 58285 Gevelsberg (DE); Dinger, Jürgen, 42899 Remscheid (DE)
(74) Vertreter: Manitz, Finsterwald & Partner GbR

(56) Entgegenhaltungen:
- WO-A-98/54811
- DE-A- 3 327 532
- DE-A- 4 040 405
- DE-A- 4 231 970
- US-A- 5 612 659

## Beschreibung

Die Erfindung betrifft einen Trennschalter nach dem Oberbegriff des Anspruchs 1.

Bei modernen Kraftfahrzeugen nimmt die Anzahl elektrischer Steuergeräte entsprechend der Anzahl von an einem Bordnetz hängender Verbraucher immer mehr zu, so daß zur Erhöhung der Betriebssicherheit die Steuergeräte üblicherweise mit einem fahrzeuginternen Bussystem vernetzt sind und in einer Art Ringleitung von einer zentralen Steuereinrichtung digitale Schaltsignale empfangen, die mittels Mikroprozessoren in den Steuergeräten entschlüsselt und in entsprechende Befehle an die unmittelbar benachbarten Empfänger umgesetzt werden.

Solche Datenbus-Systeme im Kraftfahrzeug orientieren sich üblicherweise am sogenannten CAN-Standard (Controller Area Network). In der Regel gehen daher die Steuergeräte bzw. die in diesen angeordneten Mikroprozessoren nach Abschalten des Fahrzeugs nach einer von der Art des Steuergeräts abhängigen Verzögerungszeit in einen Ruhe- oder Schlafmodus über. In diesem Zustand ist der Ruhestromverbrauch der Steuergeräte relativ gering, kann sich in der Summe aber doch auf einen eine Fahrzeugbatterie permanent belastenden Strom von einigen 100 mA belaufen, insbesondere wenn hierzu noch eine scharf geschaltete Überwachungsanlage hinzu kommt.

Steht ein solches Fahrzeug dann längere Zeit, ohne daß die Batterie durch den Generator bei laufendem Motor geladen werden kann, beispielsweise bei einer längeren Abwesenheit des Fahrzeughalters, beim Überwintern des Fahrzeugs oder bei einem längeren Transport auf Schiffen nach Übersee, dann kommt es in Verbindung mit der sich stets ergebenden, nicht zu vermeidenden Seibstentladung der Batterie zu einer so starken Entladung, daß unter Umständen sogar die Fahrzeugbatterie unheilbar beschädigt wird, jedenfalls eine Startfähigkeit des Fahrzeugs nicht mehr vorliegt.

Ein Fahrzeug mit einer so stark entladenen Batterie wird häufig durch Fremdstart wieder in Betrieb genommen, also angelassen, und zwar indem eine zweite Batterie, die in der Regel von einem Fremdfahrzeug stammt, parallel zu der entladenen Fahrzeugbatterie geschaltet wird. Nicht selten kommt es hierbei allerdings, insbesondere nachts, zu einer Verwechslung der Pole, wodurch nicht nur die ohnehin stark geschwächte Fahrzeugbatterie, sondern auch die elektrischen Einrichtungen und Steuergeräte im Fahrzeug, also die gesamte Fahrzeugelektrik einschließlich Generator und Generatordioden sowie die Elektronik nachhaltig Schaden nehmen können.

Problematisch ist daher bei Kraftfahrzeug-Bordnetzen der Schutz des Bordnetzes und seiner Komponenten vor Verpolung, der Schutz der eingebauten Fahrzeugbatterie vor Tiefentladung, wie sie beispielsweise bei Überseetransport, bei längerem Stillstand des Fahrzeugs, bei zu starker Belastung und damit verbundener Entladung auftreten kann und schließlich der Schutz des Bordnetzes vor Überspannung, wie sie bei einer Fremdstarthilfe, auch als sogenannter jump start bezeichnet, auftreten kann.

Bekannt ist es, einen Schutz der Batterie gegen Tiefentladung beim Überseetransport derzeit dadurch zu gewährleisten, daß die Batterie mit Hilfe eines Trennschalters nach Verladung des Fahrzeugs auf dem Schiff manuell vom Bordnetz getrennt wird. Beim Entladen, um also das Fahrzeug von Bord fahren zu können, wird der Trennschalter wieder geschlossen und vor der endgültigen Inbetriebnahme beim jeweiligen Händler schließlich entfernt.

Besonders schwerwiegend ist das erwähnte Problem der Falschpolung bei Fremdstarthilfe, da eine Beseitigung des Schadens nur durch Austausch der nicht hinreichend geschützten, durch die Falschpolung unrettbar zerstörten Elektrik- und Elektronikkomponenten bei entsprechend hohen Kosten möglich ist. Besondere Bedeutung hat ein Verpolungsschutz beispielsweise bei der H-Brücken-Ansteuerung von Stellmotoren unter Einsatz von Power-MOS-Transistoren, da im Verpolungsfall der Strom durch die Inversdioden nicht durch die Last begrenzt wird.

Ferner führt die Tiefentladung von Batterien deshalb zu einer nachhaltigen Schädigung, weil im Normalbetrieb die durch die elektrische Ladung an den Elektroden erzeugte elektrische Spannung diese gegen die Aggressivität der Schwefelsäure schützt. Bricht diese Spannung aufgrund einer Tiefentladung zusammen, so entfällt der Schutz der Elektroden, und es kommt zu Zersetzungserscheinungen, die schon nach kurzer Zeit die Elektroden unumkehrbar so stark schädigen, daß aufgrund der drastischen Zerstörung der Speicherkapazität die Speicherfunktion der Batterie verloren geht.

Der Erfindung liegt daher die Aufgabe zugrunde, eine Tiefentladung einer Fahrzeugbatterie zu verhindern und gleichzeitig sicherzustellen, daß im Falle einer erforderlich werdenden Fremdstarthilfe eine Verpolung zuverlässig verhindert wird.

Die folgenden Veröffentlichungen beziehen sich auf Batterietrennschalter bzw. auf die Möglichkeit, unter bestimmten Umständen eine Batterie von ihren Verbrauchern abzutrennen, wenn deren Tiefentladung droht:
DE 41 37 146 A1, DE 27 32 094 A1, DE 196 06 448 A1, US-PS 35 36 876, DE 34 02 372 A1, DE 42 11 578 C1, DE 33 03 185 A1, DE-AS 1 086 322, DE-GM G 92 16 774.8,
DE-GM G 91 15 293.3, DE 33 27 532 A1. Ferner sind trennbare Polverbinder bekannt aus US-PS 4 740 178 und DE 44 04 909 A1.

Um bei einem Fahrzeug bei versehentlichem Nichtabschalten von Beleuchtungseinrichtungen eine Tiefentladung der Batterie zu vermeiden, schlägt die DE 41 37 146 A1 die Möglichkeit vor, das Einschalten der Fahrzeugbeleuchtung nur dann freizugeben, wenn der durch die Brennkraftmaschine angetriebene Generator auch Strom erzeugt. Problematisch ist hierbei, daß lediglich die Beleuchtungseinrichtungen berücksichtigt werden, wobei zum Halten eines Relais Strom von einem Kondensator zur Verfügung gestellt werden muß, dessen Größe und Langzeiteigenschaften ein solches Verfahren ungeeignet machen. Es wird auch nicht überprüft, ob die Belastung der Batterie tatsächlich zu einer Tiefentladung führt.

Bei der DE 27 32 794 A1 wird die Batterie bei Erreichen einer kritischen Unterspannung über einen Halbleiter von dem zu versorgenden Netz abgetrennt. Zwar benötigt der Halbleiterschalter im gesperrten Zustand keine Ansteuerleistung, problematisch ist aber, daß ein Ansprechen der Schutzschaltung bei Unterspannung auch während des regulären Betriebs des Fahrzeugs nicht verhindert wird. Dies ist aber gerade bei Kraftfahrzeugen wesentlich, da bei einem Startvorgang die Batterie sehr stark belastet wird und die Spannungen im Bordnetz einbricht. In diesem Fall darf ein Tiefentladungsschutz aber nicht ansprechen.
Die DE 196 06 448 A1 betrifft eine Anordnung, die bei einem Unfall die Verbindung zwischen Batterie und dem Bereich Starter/Generator mittels einer Treibladung auftrennt. Die Treibladung wird durch ein Signal des Airbag-Sensors ausgelöst. Die Trennung ist dauerhaft, so daß ein erneuter Start des Fahrzeugs nicht mehr möglich ist. Zur Reparatur müssen mindestens Teile des Starterkabels ausgetauscht werden.

Der aus der US-PS 3 536 876 bekannte Batterietrennschalter umfaßt im Bereich der Polanschlußklemme zwei teleskopartig ineinander gesteckte, unter der Trennwirkung einer Feder stehende Kontaktteile, die mit Hilfe eines Querstiftes zusammengehalten werden und aufgrund ihrer elektrischen Leitfähigkeit die elektrische Verbindung zwischen dem Bordnetz und der Batterie aufrecht erhalten. Sobald über eine beispielsweise im Bereich des Armaturenbretts angebrachte Seilzugverbindung der Querstift herausgezogen wird, erfolgt die elektrische Abtrennung der Batterie vom Bordnetz.

In vergleichbarer Weise werden bei der DE 34 02 372 A1 zwei leitende, einander koaxial gegenüberliegende Elektroden durch ein zwischen ihnen liegendes Isolatorstück getrennt, das jedoch im Normalfall von einer elektrisch leitenden Schaltbrücke überbrückt ist. Die Schaltbrücke läßt sich durch eine Axialverschiebung einer Hülse öffnen.

Aus der DE 42 11 578 C1 geht eine Batterietrennvorrichtung für Kraftfahrzeuge mit einem Batterietrennschalter hervor, der vom Batterieraum manuell und vom Fahrersitz aus mit einem Sicherheitshauptschalter ferngesteuert betätigbar ist. Vor einer möglichen Öffnung des Batterietrennschalters müssen zunächst alle zündschloßgeschalteten Verbraucher abgeschaltet und eine Motorabschaltung eingeleitet werden.

Ein weiterer aus der DE 33 03 185 A1 bekannter Batterietrennschalter verfügt zum einen über einen Handgriff zum willkürlichen manuellen Ein- und Ausschalten mittels in einer Hülse angeordneten Nokkenlaufbahnen, zum anderen läßt sich eine Betätigung im Ausschaltsinn auch durch eine andere Kraftquelle, beispielsweise eine Sprengpatrone anstoßen, die durch einen Impuls in Abhängigkeit vom Ansprechen eines Feuerdetektors auslösbar ist.

Ferner ist aus dem DE-GM G 91 15 293.3 ein auf wenigstens einem Pol einer Batterie angeordnetes Batterieschloß bekannt, welches manuell von außen mittels eines Schlüssels betätigt entweder die Verbindung der Batterie zu dem Bordnetz herstellt oder unterbricht. Ein in ähnlicher Weise ausgebildetes, jedoch fernbedientes Batterieschloß ist aus dem DE-GM G 92 16 774.8 bekannt, welches eine elektrische Verbindung zum Bordnetz nur bei Empfang eines richtig codierten signales herstellt.

Eine weitere bekannte Trennschalteinrichtung für Kraftfahrzeuge, die aus der DE 33 27 532 A1 hervorgeht, spricht auf elektrische Befehle eines Notbefehlsgebers an, ist also fernbedient zu schalten und ermöglicht eine Trennung der Batterie vom Bordnetz nicht mehr in Notfällen, auch dann, wenn das Fahrzeug abgestellt wird. Eine solche Standausschaltung wird allerdings nur zugelassen, wenn keine sonstigen Stromverbraucher im Kraftfahrzeug eingeschaltet sind oder der Motor läuft.

Direkt in die Polverbinder eingebaute Trennvorrichtungen, um eine Batterie vom Bordnetz zu trennen, gehen ferner aus der DE 44 04 909 A1 und dem US-PS 4 740 178 hervor, wobei die Anschlußeinrichtung aus der DE 44 04 909 A1 ein isolierendes Gehäuse umfaßt, innerhalb welchem elektrische Kontaktfinger in Kontaktöffnungen eingesetzt werden, während bei dem US-PS 4 740 178 ein direkt mit dem Batterieanschlußpol verbundener Kontaktblock Aufnahmeöffnungen aufweist, in welche zwei parallele Kontaktfinger eingeschoben werden können.

Auch auf dem Gebiet der Verpolschutzeinrichtungen, etwa bei Batterieladegeräten oder beim Anschluß von Batterien an Bordnetze von Kraftfahrzeugen, sind eine Vielzahl von Lösungen etwa aus den folgenden Veröffentlichungen bekannt: DE 42 31 970 C2 mit dem entsprechenden DE-GMG 92 12 878.5, DE 196 03 117 A1, DE 28 36 041 A1, DE 29 19 021 A1, DE 29 19 022 A1, DE 38 27 045 A1, wobei die bekannten Verpolschutzanordnungen für ein Batterieladesystem und/oder ein Bordnetz für Kraftfahrzeuge üblicherweise darauf beruhen, daß eine Sensorschaltung vorgesehen ist, die die Polarität der anzuschließenden Batterie erfaßt und eine Verbindung zu einem Ladegerät bzw. zum Bordnetz erst dann, beispielsweise durch das Schließen eines Schalters zuläßt, wenn die Polung ordnungsgemäß ist.

Dabei arbeitet die aus dem Batterieladegerät der DE 42 31 920 C2 hervorgehende Verpolschutzschaltung so, daß von einem die Verpolung erfassenden Mikroprozessor dem Anschlußpunkt für den Pluspol der zu ladenden Batterie über einen Spannungsteiler selbst eine positive Spannung zugeführt wird, im Falle daß der Mikroprozessor an einem ersten Erkennungseingang eine ordnungsgemäße Polung nicht sicher erkennen kann. Tatsächlich ergibt sich bei einer Falschpolung über diesen Spannungsteiler dann eine so stark in Richtung auf negative Werte verlagerte, vom Mikroprozessor auszuwertende Meßspannung am Spannungsteiler, daß für den Verpolungsfall eine korrekte Verpolungsmeldung ausgegeben und entsprechende Maßnahmen getroffen, beispielsweise Umpolung der Anschlüsse vorgenommen werden können.

Bei der Verpolschutzschaltung entsprechend DE 196 03 117 A1 sind MOSFET-Transistoren vorgesehen, durch welche der durch die Schutzschaltung hervorgerufene Spannungsabfall wesentlich verringert wird, so daß der Einsatz der Schutzschaltung auch bei niedrigen Gleichspannungen möglich ist.

Die Verpolschutzschaltung nach der DE 38 27 045 A1 ermöglicht den Anschluß von Batterien oder Akkus in beliebiger Polung, da zunächst eine Meßeinrichtung über steuerbare Schalter die Polarität der Batterien feststellt und anschließend in Abhängigkeit zum Meßergebnis den Anschluß mit der entsprechend korrekten Polarität an die Ladeschaltung vornimmt.

Die aus der DE 29 19 022 A1 bekannte Anordnung zum Schutz eines Generatorsystems und/oder von Verbrauchern gegen eine Beschädigung durch ein Anschließen einer falsch gepolten Spannungsquelle umfaßt eine Einrichtung zum Erkennen der Falschpolung, bestehend aus der Serienschaltung eines Verpolschutzrelais und einer Verpolschutzdiode, wobei durch das Verpolschutzrelais eine Kontaktbrücke steuerbar ist, die in Reihe mit den Anschlüssen der Batterie liegt.

Die weiter vorn genannte Aufgabe wird bei dem Trennschalter der oben beschriebenen Art erfindungsgemäß durch die Merkmale des Anspruchs 1 gelöst, wobei sich der Vorteil ergibt, daß eine einheitliche Einrichtung sowohl für die Abtrennung der Batterie vom Bordnetz im Falle eines Transports oder einer längeren Stillegung des Fahrzeugs, vorzugsweise automatisch, sorgt als auch sicherstellt, daß, beispielsweise im Falle eines Fremdbatterieanschlusses, eine Verpolung zuverlässig verhindert wird. Hierzu ist ein Starthilfestützpunkt im Bereich des Hochstrom-Trennschalters vorgesehen, der mit dem Pluspol einer Hilfsbatterie, beispielsweise über ein Starthilfekabel, oder auch mit einer sonstigen, einen entsprechend hohen Anlaßstrom liefernden Starthilfeeinrichtung, beispielsweise einer mit Netzwechselspannung gespeisten, fahrbaren Gleichrichterschaltung, verbunden werden kann.

Vorteilhaft ist ferner, daß für die jeweils stattfindenden Schaltvorgänge keine Relais eingesetzt zu werden brauchen, die für die hier im Extremfall auftretenden Ströme, bei einem Anlaßvorgang vom Fremdstartstützpunkt ausgehend beispielsweise unter Umständen mehrere 100 A, ungeeignet sind. Für das Verbinden der verschiedenen Kontaktbereiche ist vorzugsweise eine auf einem rohrförmigen Kontaktträger verschiebbare Schalthülse vorgesehen, die eine Kontaktbrückenfunktion erfüllt.

Dabei ist der Kontaktträger so ausgebildet, daß er mindestens drei voneinander isolierte Kontaktbereiche aufweist, die durch unterschiedliche Stellungen der als Kontaktbrücke ausgebildeten verschiebbaren Hülse angefahren werden können, so daß sich unterschiedliche elektrische Verbindungen der isolierten Kontaktbereiche ergeben.

Der Antrieb für die Kontaktbrücke erfolgt dabei in erster Linie durch elektrische Antriebsmittel, beispielsweise durch motorische Verstellung; es ist aber auch eine manuelle Verstellung der Kontaktbrükke möglich, wenn beispielsweise bei einer tiefentladenen und entsprechend schwachen Batterie und in Trennposition befindlichem Hochstrom-Trennschalter ein Umschalten in eine Kontaktposition zwischen einem vorgesehenen Fremdstartstützpunkt und dem Bordnetz nicht mehr möglich ist.

Alternativ liegt es natürlich innerhalb des erfindungsgemäßen Rahmens, das für die Schaltbewegungen des Hochstrom-Trennschalters zuständige Steuergerät mit einer Versorgungsleitung jedenfalls zusätzlich auch noch mit dem Fremdstartstützpunkt ständig zu verbinden, ergänzend zu einem ohnehin vorhandenen Polaritätssensor vom Steuergerät zum Fremdstartstützpunkt.

Ein weiterer Vorteil besteht darin, daß auf eine Falschpolung im Fremdstartfalle sicher reagiert werden kann, weil das die Polarität am Fremdstartstützpunkt erfassende Steuergerät eine Verbindung des Fremdstartstützpunkts mit dem Bordnetz, also das Durchschalten des Hochstrom-Trennschalters nur dann zuläßt, wenn eine polgerechte Aufschaltung der Fremdbatterie oder eines sonstigen Fremdspannungsversorgungsaggregats erfolgt ist.

Der vorliegende Hochstrom-Trennschalter macht es ferner möglich, eine Tiefentladung der Fahrzeugbatterie durch ständig ans Bordnetz angeschlossene, weiter vorn schon erwähnte Verbraucher dadurch sicher zu vermeiden, daß bei Erreichen einer vorgegebenen Batteriemindestspannung, die, um hier zum besseren Verständnis auch ein die Erfindung allerdings nicht einschränkendes Zahlenbeispiel zu nennen, bei etwa 11,8 Volt liegen kann, die Batterie automatisch vom Bordnetz abgetrennt wird, so daß die vorhandene Restladung der Batterie bei den heutzutage zur Verfügung stehenden, nur eine sehr schwache Selbstentladung aufweisenden Batterien auch über sehr lange Zeiträume erhalten bleibt und die spätere Eigenstartmöglichkeit sichert.

In gleicher Weise kann ein solches, den Batteriezustand überwachendes Steuergerät schließlich auch zum Abschalten der Stromversorgung für ein Verbrauchernetz bei Überlast eingesetzt werden, und zwar auch ohne daß es einer Messung des tatsächlichen Stromflusses bedarf, einfach indem ein abrupter Spannungsabfall an der Batterie mit einem vorherigen Zustand verglichen wird. Hier bedarf es allerdings der Berücksichtigung weiterer Fahrzeugparamter, damit eine solche Trennung bzw. Umschaltung für die Fahrzeuginsassen keine Nachteile erbringt. Bedingungen sind hier beispielsweise, was auch für die automatische Abtrennung der Batterie vom Bordnetz im Falle einer Unterspannung zutrifft, daß das Fahrzeug steht und auch nicht angelassen wird, denn in diesem Fall kommt es naturgemäß zu stärkeren Schwankungen der Bordnetzspannung.

Weitere Vorteile und Merkmale der Erfindung werden im Zusammenhang mit der Zeichnung näher erläutert bzw. sind als Ausgestaltungen und Weiterbildungen Gegenstand der Merkmale der Unteransprüche.

Die Zeichnung zeigt in
Fig. 1 eine mögliche bevorzugte Ausführungsform des der Erfindung zugrunde liegenden Hochstrom-Trennschalters in seinem mechanischen Aufbau;
Fig.2a, 2b und 2c Querschnitte des Hochstrom-Trennschalters in Fig. 1 entsprechend den Linien IIa-IIa, IIb-IIb und IIc-IIc;
Fig.3 schematisiert eine Gesamtdarstellung von Fahrzeugstruktur mit Verbrauchern, Batterie und Hochstrom-Trennschalter in herausgezogener vergrößerter Darstellung mit peripheren Zusatzgeräten und Sensorik, während
Fig. 4 einen Teilaspekt der durch den Hochstrom-Trennschalter möglichen Umschaltvarianten schematisiert angibt.

Der Grundgedanke der Erfindung besteht darin, einen Hochstrom-Trennschalter zwischen einer Batterie und einem Verbrauchernetz, bevorzugt auf den Bereich Kraftfahrzeuge bezogen, so auszubilden, daß sowohl der Fall einer Unterspannung, der sich etwa durch längeren Stillstand des Fahrzeugs ergibt, als auch der Anschluß einer falsch gepolten externen Spannungsquelle sicher beherrscht werden und in beiden Fällen eine automatische Reaktion des Hochstrom-Trennschalters dafür sorgt, daß keine Beschädigungen im Bereich der Batterie bzw. des Bordnetzes auftreten können.

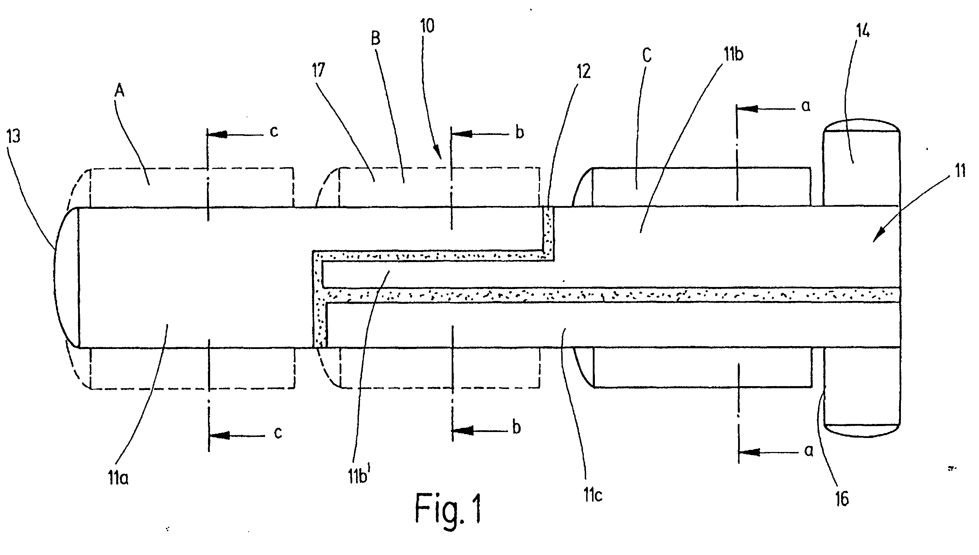

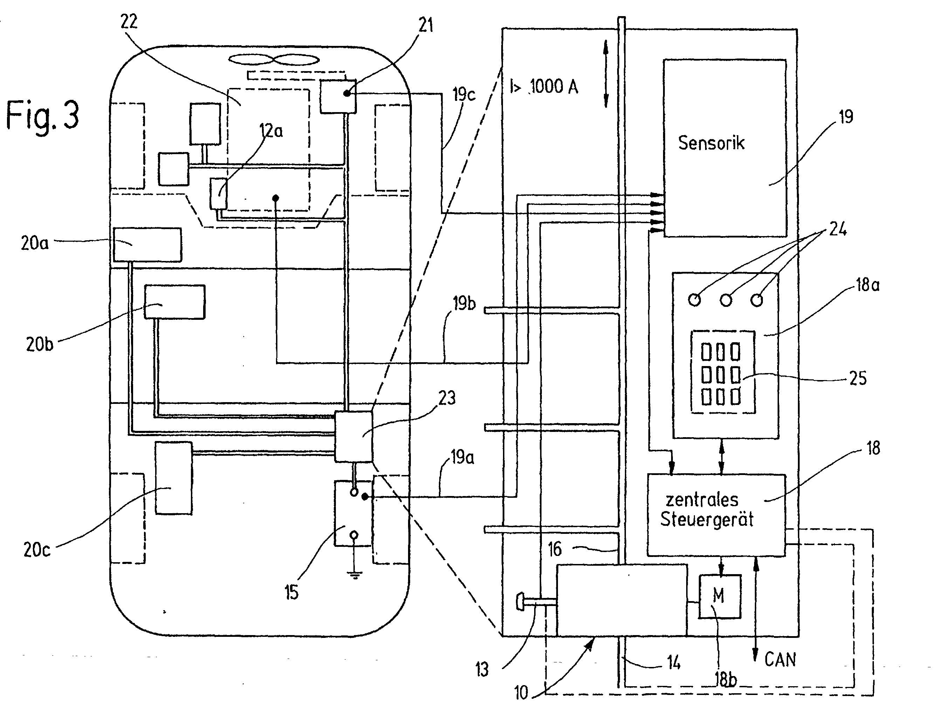

In Fig. 1 ist der mechanische Aufbau eines bevorzugten Ausführungsbeispiels eines Hochstrom-Trennschalters dargestellt und mit 10 bezeichnet. Um die drei Schaltstellungen zu gewährleisten, die zur Realisierung der erfindungsgemäßen Funktion erforderlich sind, umfaßt der Trennschalter der Fig. 1, wie er im folgenden lediglich noch genannt werden soll, einen rohrförmigen Kontaktträger 11 mit drei gegeneinander isolierten Kontaktbereichen 11a, 11b und 11c. Die Kontaktbereiche 11a, 11b und 11c sind als Teilbereiche der Rohrform ausgebildet und voneinander beispielsweise durch eine geeignete Isolierschicht 12 getrennt, so daß der gesamte Kontaktträger 11 die in Fig. 1 gezeigte Rohrform aufweist. Der Kontaktbereich 11a ist zur Herstellung der elektrischen Verbindung mit einer externen Spannungsquelle mit einem von außen zugänglichen Fremdstartstützpunkt 13 verbunden (s. Fig. 3), der Kontaktbereich 11b bildet einen Anschlußpunkt 14 aus, der fest mit der Batterie 15 (Fig. 3) verbunden ist, und der Kontaktbereich 11c bildet einen Kontaktanschluß 16, der mit den verschiedenen Leitungen verbunden ist, die zum Bordnetz führen und dieses bilden.

Da das bei dem in Fig. 1 dargestellten mechanischen Aufbau des Trennschalters vorgesehene Schaltglied von einer auf dem rohrförmigen Kontaktträger 11 axial verschieblichen Hülse 17 gebildet ist, die als die einzelnen Kontakte miteinander verbindende bzw. je nach ihrer Schaltstellung auch trennende Kontaktbrücke ausgebildet ist, erstrecken sich die einzelnen isolierten Kontaktbereiche 11a, 11b und 11c segmentartig in axialer Richtung, so daß eine Verschiebung der Schalthülse 17, wie sie im folgenden genannt wird, jeweils gewünschte Schaltpositionen bestimmt. Hierauf wird gleich noch eingegangen.

Damit die Schalthülse 17 bei ihrer axialen Verschiebung, was der Einnahme entsprechender Schaltpositionen entspricht, die gewünschten Kontaktverbindungen zwischen den einzelnen Kontaktbereichen vornehmen kann, erstrecken diese sich über jeweils mindestens zwei Kontaktpositionen auf dem rohrförmigen Kontaktträger in axialer Richtung, so daß bei den drei, durch die axiale Segmentierung vorgegebenen Kontaktpositionen der Schalthülse 17 auf dem Kontaktträger 11 je nach axialer Erstreckung der einzelnen Kontaktbereiche jeweils gewünschte Schaltungen vorgenommen werden können. Auf mögliche Ausführungsformen wird weiter unten noch eingegangen.

Entsprechend der Darstellung der Fig. 3 erfolgt die mechanische Verschiebung der Schalthülse 17 durch einen externen Antrieb, vorzugsweise Elektromotor 18 oder auch eine sonstige motorische, elektromagnetische oder hydraulische Verstellwirkung. Umschaltbewegungen können sowohl automatisch veranlaßt sein, bei Auftreten einer Unterspannung also durch kontinuierliches Erfassen der Batteriespannung und Anfahren einer Trennposition im Schalterbereich, als auch willkürlich über ein von einer Bedienungsperson, nämlich dem Fahrer, gegebenes Schaltsignal. Hierzu ist ein zentrales Steuergerät 18 vorgesehen, dem eine Sensorik 19 zuarbeitet. In Fig. 3 ist zum besseren Verständnis noch dargestellt stark schematisiert in ovaler Umrundung die Struktur eines Kraftfahrzeugs mit allgemeinen Verbrauchern 20a, 20b, 20c, Generator 21, Brennkraftmaschine 22 mit Starter 22a. Die Batterie 15 ist über eine Trennschaltereinheit 23 mit den diversen Verbraucherzuleitungen verbunden, die, vorzugsweise in einem einheitlichen Gehäuse, die soeben schon erläuterten Bauteile und Komponenten aufweist, insbesondere den Hochstrom-Trennschalter 10 mit zugeordneter Steuerelektronik.

Dabei kann das in Fig. 3 gezeigte zentrale Steuergerät 18 auch noch weitere Aufgaben im Bereich der Kraftfahrzeugelektronik übernehmen, beispielsweise als Zentrales Elektronikmodul sozusagen das Gehirn des ganzen Systems darstellen und den der Erfindung zugrunde liegenden Hochstrom-Schalter als Teilbereich seiner Aufgaben mitverwalten. Es ist aber auch möglich, hierfür eine gesonderte Elektronik, beispielsweise Mikroprozessor, einzusetzen.

Die Sensorik 19 verfügt über Signalleitungen 19a,19b,19c, die die Batteriespannung überwachen, beispielsweise Betrieb, Temperatur und Drehzahl der Brennkraftmaschine feststellen, oder auch die Generatorfunktion erfassen, um nur einige der peripheren Parameter zu nennen, die beim Betrieb des Trennschalters einzubeziehen und zu beachten sind.

Zur Eingabe von externen Befehlen an das zentrale Steuergerät, beispielsweise für den Befehl "Abschalten der Batterie" durch Anfahren der Stellung "Transport" ist eine Eingabeschaltung 18a dem zentralen Steuergerät 18 zugeordnet, die über eine Tastatur 24, ein Keyboard 25 o.dgl. verfügen kann.

Ein Ausführungsbeispiel eines möglichen Funktionsablaufes läßt sich am besten anhand der Darstellung der Fig. 4 erläutern, bei der die jeweiligen Schaltpositionen durch zwei Einzelschalter S1, S2 symbolisiert sind, die von einer elektrischen Steuereinheit 18' geschaltet werden, die bei diesem Ausführungsbeispiel als separates Bauteil lediglich der Steuerung des Trennschalters dient. Die beiden festen Kontakte der Schalter S1 und S2 sind mit dem Batterieanschluß 14 (Schalter S1) bzw. dem Fremdstartanschluß 13 verbunden, während die zusammengefaßten Schaltkontaktanschlüsse den Bordnetzanschluss 16 bilden. Je nach Stellung der Schalter lassen sich unterschiedliche Schaltpositionen definieren, wobei auch auf die bevorzugte Ausführungsform des Trennschalters entsprechend Fig. 1 verwiesen wird.

In einer ersten Stellung der eine Kontaktbrücke bildenden Schalthülse 17 sind beide Schalter S1, S2 der Fig. 4 geöffnet - dies entspricht der Position A des Trennschalters 10 der Fig. 1, in welcher die Schalthülse 17, die gestrichelt angedeutet ist, lediglich den einen mit dem Fremdstartstützpunkt oder Fremdstartanschluß 13 verbundenen Kontaktbereich 11a berührt. Da sonst keine anderen Kontakte miteinander verbunden sind, sind in dieser ersten Stellung Bordnetz, Batterie und der Fremdstartanschluß 13 voneinander getrennt. Diese Stellung trennt auch die Batterie von allen Verbrauchern. Diese Stellung entspricht einer Stillegung des Fahrzeugs über einen längeren Zeitraum und löst das Problem des Überseetransports.

In einer zweiten Stellung, die der Schalthülsenposition B in Fig. 1 entspricht, sind die beiden Schalter S1, S2 der Fig. 4 geschlossen, und das Bordnetz ist mit dem Fremdstartanschluß 13 und mit dem Fahrzeugbatterieanschluß 14 verbunden. In dieser Stellung muß ein sicherer Verpolschutz gewährleistet sein, daher wird vor dem Anfahren dieser Stellung von dem zentralen Steuergerät 18 bzw. der elektronischen Steuereinheit 18' die Spannung des Fremdstartanschlusses 13 überprüft, über die entsprechenden, von der Sensorik 19 zu diesem Anschluß geführten Signalleitungen. Die elektronische Steuereinheit bzw. die entsprechenden Steuerbefehle des zentralen Steuergeräts können nur dann ein Anfahren dieser Stellung bewirken, wenn hier eine ordnungsgemäße positive Spannung anliegt. Auf weitere Einzelheiten in diesem Zusammenhang einzugehen ist nicht geboten, da die Vornahme entsprechender Programmierungen der hier vorgesehenen elektronischen Systeme für jeden Fachmann problemlos möglich ist.

Ist also die Spannung am Fremdstartanschluß 13 negativ, dann wird diese Stellung nicht angefahren. Es ist auch möglich, daß das zentrale Steuergerät 18 automatisch in diese zweite Stellung einfährt, die den Fremdstartanschluß 13 mit Bordnetz (und Batterie) verbindet, wenn an diesem Anschluß überhaupt eine positive Spannung detektiert wird, da in diesem Falle die Absicht erkennbar wird, mit Hilfe einer Fremdspannungsversorgung beispielsweise einen Startvorgang einzuleiten und/oder die Batterie zu laden. Üblicherweise, also im Normalbetrieb eines Kraftfahrzeugs ist der Fremdstartanschluß 13 spannungslos.

Im Normalbetrieb, was der dritten Stellung C entsprechend Fig. 1 bedeutet, ist daher der Schalter S2 stets offen, und der Schalter S1 ist geschlossen, so daß in dieser Schaltstellung Bordnetz und Batterie miteinander verbunden sind.

Diese dritte Schaltposition C des Hochstrom-Trennschalters wird nur, wie weiter vorn schon erwähnt, im Falle einer an der Batterie 15 auftretenden und von der Sensorik detektierten Unterspannung durch Abtrennung der Batterie vom Bordnetz verlassen oder erfolgt aufgrund einer manuellen Eingabe, beispielsweise durch Drücken eines "Transportschalters" der Eingabeschaltung 18a dann, wenn ein Fahrer oder eine sonstige Bedienungsperson beabsichtigt, das Kraftfahrzeug für längere Zeit stillzulegen, etwa für den Fall eines Überseetransports. Auf jeden Fall ist im Falle der Trennung der Batterie vom Bordnetz, in welchem Fall die Schalthülse 17 entsprechend Fig. 1 in die Stellung A einfährt, bei in diesem Falle stromlosem Fremdstartanschluß 13 eine vorherige Zustandsüberprüfung des Kraftfahrzeugs erforderlich, was ebenfalls durch eine entsprechende Programmierung veranlaßt werden kann.

So muß sichergestellt sein, daß ein Abschalten der Batterie vom Bordnetz nur dann erfolgt, wenn das Fahrzeug steht und die Umschaltung auch keine sonstigen Nachteile mit sich bringt. Das zentrale Steuergerät überprüft daher insbesondere den Zustand der Brennkraftmaschine und klärt insbesondere auch die Frage, ob die Brennkraftmaschine gerade angelassen wird, da es in diesem Falle zumindest bei älteren Batterien zu starken Spannungseinbrüchen kommen kann und fälschlicherweise die Abschaltung vorgenommen wird, obwohl die Brennkraftmaschine im nächsten Moment angesprungen wäre.

Es versteht sich, daß je nach axialer Streckung der verschiedenen Kontaktbereiche auf dem rohrförmigen Kontaktträger 11 auch andere Schaltkonfigurationen möglich sind - so könnte beispielsweise der zungenförmige mittlere Fortsatz 11b' des zur Batterie führenden Kontaktbereichs, der auch in der mittleren Schaltposition B die Batterieverbindung bewirkt, auch entfallen, so daß in diesem Fall eine möglicherweise stark entladene Batterie den Fremdstartan-Schluß 13 nicht noch zusätzlich bei einem Anlaßvorgang belastet.

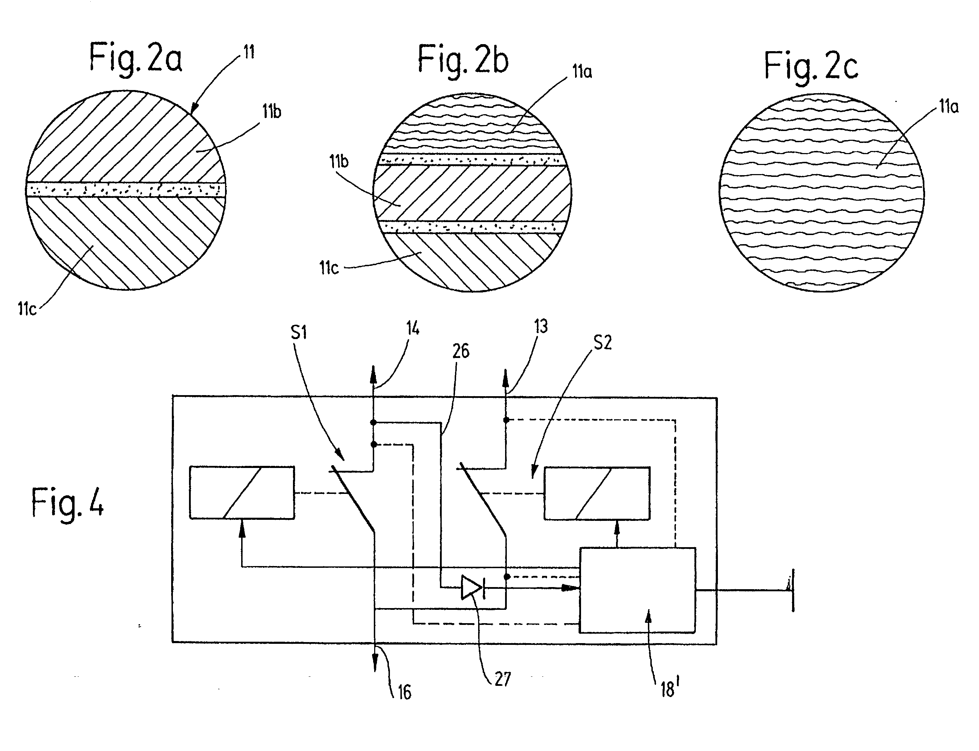

Jedenfalls zeigen die Querschnitte der Figuren 2a, 2b und 2c bei dem bevorzugten Ausführungsbeispiel, daß entsprechend Fig. 2a, was der Schaltposition C entspricht, die beiden Kontaktbereiche "Batterie" und "Bordnetz" über die Schalthülse 17 verbunden sind, in der mittleren Schaltposition B sind alle drei Kontaktbereiche 11a, 11b und 11c über die Schalthülse 17 elektrisch verbunden und in der Position A entsprechend Fig. 2c ist nur ein einziger Kontaktbereich vorhanden, der mit dem Fremdstartanschluß 13 verbunden ist und, da üblicherweise spannungsfrei, auch die Trennposition zwischen Bordnetz und Batterie für die Schalthülse 17 bildet.

Auf einen Gesichtspunkt ist noch einzugehen: Es versteht sich, daß nach der Trennung zwischen Batterie und Bordnetz wegen Fahrzeugstillegung oder Überseetransport oder aus sonstigen Gründen ein Wiedereinschalten durch ein Schaltsignal des Fahrers veranlaßt werden kann über die Eingabeschaltung 18a zum zentralen Steuergerät 18 - daher wird auch im Falle der Batterie-Bordnetztrennung das zentrale Steuergerät von der Batterie nicht abgetrennt, sondern geht beispielsweise lediglich in einen üblichen Ruhemodus über. Letztlich könnte allerdings auch diese Möglichkeit bei einer Tiefentladung der Batterie problematisch werden, wenn die Restleitung nicht mehr zum Betätigen des Hochstrom-Schalters ausreicht.

In einer vorteilhaften Ausgestaltung der Erfindung ist es daher empfehlenswert, das zentrale Steuergerät über eine Speiseleitung 26 auch ständig mit dem Fremdstartanschluß 13 zu verbinden, auch in diesem Fall wieder unter Umgehen des Hochstrom-Trennschalters, so daß dann, wenn ein externer Anlaßversuch (jump start) erfolgt, über die dann am Fremdstartanschluß 13 anliegende Spannung zunächst das Steuergerät mit Strom versorgt wird und die Schalthülse 17 in die mittlere Position B überführt werden kann. Für den Fall, daß in diesem Fall der tiefentladenen Eigenbatterie noch eine Falschpolung am Starthilfe- bzw. Fremdstartanschluß hinzu kommt, könnte, wie in Fig. 4 dargestellt, in die Leitung 26 zur elektronischen Steuereinheit 18' noch eine nur für positive Spannungen leitende Sperrdiode 27 geschaltet werden, die bei einer Verpolung am Fremdstartanschluß 13 den stromlosen Zustand der elektronischen Steuereinheit 18' weiter aufrecht erhält, so daß ein Fremdstart dann eben nicht einleitbar ist. Dies ist ein deutliches Signal für die Hilfsperson, daß es soeben zu einer Verpolung gekommen ist. Der Schutz der Fahrzeugkomponenten und auch der elektronischen Steuereinheit 18' durch den Hochstrom-Trennschalter ist dabei weiterhin gewährleistet.

## Patentansprüche

1. Trennschalter zwischen einer Batterie und einem Verbrauchernetz bei Kraftfahrzeugen, **gekennzeichnet durch** einen, einen Fremdstartanschluss (13) umfassenden mehrstufigen Schalter (10; S1, S2), mit drei Schaltstellungen, dessen weitere Kontaktstellen mindestens einen Batterieanschluss (14) und einen Bordnetzanschluss (16) bilden, wobei der ersten Schaltstellung alle drei Auschlüsse voneinander getrennt sind, in der zweiten Schaltstellung alle drei Anschlüsse miteinander verbunden sind, und in der dritten Schaltstellung lediglich Bordnetzanschluss und Batterieanschluss miteinander verbunden sind.

2. Schalter nach Anspruch 1, **dadurch gekennzeichnet, daß** mindestens drei voneinander isolierte Kontaktgebiete (11a, 11b, 11c) vorgesehen sind und ein bewegliches, in mindestens drei verschiedene Kontaktpositionen (A, B, C) zu den Kontaktgebieten bewegbares, eine Brückenfunktion ausübendes Kontaktglied, wobei ein erstes Kontaktgebiet (11b) mit dem Batterieanschluß (14), ein zweites (11c) mit dem Bordnetzanschluß (16) und ein drittes Kontaktgebiet (11a) mit dem Fremdstartanschluß (13) verbunden ist.

3. Schalter nach Anspruch 1 oder 2, **dadurch gekennzeichnet, daß** ein rohrförmiger, die sich in axialer Richtung erstreckenden gegeneinander isolierten und sich axial überlappenden Kontaktgebiete (11a, 11b, 11c) bildender Kontaktträger (11) vorgesehen ist, auf dem eine eine Kontaktbrücke bildende und die Kontaktbereiche (11a, 11b, 11c) je nach eigener Position elektrisch miteinander verbindende Schalthülse (17) in axialer Richtung verschiebbar gelagert ist.

4. Schalter nach einem der Ansprüche 1 bis 3, **dadurch gekennzeichnet, daß** zur Verschiebung der Schalthülse (17) in die verschiedenen Kontaktpositionen (A, B, C) elektromotorische, hydraulische und/oder elektromagnetische Stellglieder vorgesehen sind.

5. Schalter nach einem der Ansprüche 1 bis 4, **dadurch gekennzeichnet, daß** ein Steuergerät (18; elektronische Steuereinheit 18') vorgesehen ist, das das Stellglied (18b) für die Verschiebung der Schalthülse (17) ansteuert und mit einer Sensorik (19) allgemeine Parameter, Betriebs- und Schaltzustände des Kraftfahrzeugs, die Batteriespannung (15) und die Spannung des Fremdstartanschlusses (13) überwacht.

6. Schalter nach Anspruch 5, **dadurch gekennzeichnet, daß** dem Steuergerät (18; elektronische Steuereinheit 18') eine manuell betätigbare Eingabeschaltung (18a) zugeordnet ist.

7. Schalter nach einem der Ansprüche 1 bis 6, **dadurch gekennzeichnet, daß** die Schalthülse (17) Mittel zur manuellmechanischen Verstellung aufweist.

8. Schalter nach einem der Ansprüche 1 bis 7, **dadurch gekennzeichnet, daß** das Kontaktglied (Schalthülse 17) in der dritten Stellung (Normalposition C) die Batterie (15) mit dem Bordnetz und in der zweiten Stellung (Fremdstartposition B) den Fremdstartanschluß (13) mindestens mit dem Bordnetz und in der ersten Stellung (Trennposition A) zum Batterieund Bordnetzanschluß (14, 16) kontaktfrei gehalten ist.

9. Schalter nach einem der Ansprüche 1 bis 8, **dadurch gekennzeichnet, daß** das Steuergerät (18; elektronische Steuereinheit 18') so ausgebildet ist, daß mindestens die Höhe der Eigenbatteriespannung, die Polarität am Fremdstartanschluß (13) sowie der Betriebszustand des Fahrzeugs überwacht und
- bei Unterspannung die Batterie (15) vom Bordnetz getrennt wird;
- der Fremdstartanschluß (13)nur dann angefahren wird, wenn die Polarität der ihr zugeführten Hilfsspannung korrekt ist und
- durch Schaltsignale einer Bedienungsperson die Batterie (15) dann vom Bordnetz getrennt oder mit ihm verbunden wird, wenn die sonstigen Betriebsparameter des Fahrzeugs diesen Trennvorgang zulassen.

## Claims

1. A disconnecting switch between a battery and a consumer network in motor vehicles, **characterised by** a multi-stage switch (10; S1, S2) including a jump start terminal (13) and having three switch positions and whose further contact positions form at least one battery terminal (14) and one vehicle wiring terminal (16), wherein, in the first switch position, all three terminals are disconnected from one another; in the second switch position, all three terminals are connected to one another; and, in the third switch position, only the vehicle wiring terminal and the battery terminal are connected to one another.

2. A switch in accordance with claim 1, **characterised in that** at least three contact regions (11a, 11b, 11c), which are insulated from one another, and a movable contact member, which is movable into at least three different contact positions (A, B, C) with respect to the contact regions and which exerts a bridge function, are provided, with a first contact region (11b) being connected to the battery teerminal (14), a second contact region (11c) being connected to the vehicle wiring terminal (16) and a third contact region (11a) being connected to the jump start terminal (13).

3. A switch in accordance with claim 1 or claim 2, **characterised in that** a tubular contact support (11) is provided which forms contact regions (11a, 11b, 11c), which extend in the axial direction, are insulated with respect to one another and overlap axially, and on which a sleeve cover (17) is displaceably supported in the axial direction, forms a contact bridge and electrically connects the contact regions (1 1a, 11b, 11c) to one another depending on its own position.

4. A switch in accordance with any one of claims 1 to 3, **characterised in that** electromotor, hydraulic and/or electromagnetic actuator elements are provided to displace the switch sleeve (17) into the different contact positions (A, B, C).

5. A switch in accordance with any one of claims 1 to 4, **characterised in that** a control instrument (18; electrical control unit 18') is provided which controls the actuator elements (18b) for the displacement of the switch sleeve (17) and which monitors general parameters, operating and switching states of the motor vehicle, the battery voltage (15) an the voltage of the jump start terminal (3) with a sensory system (19).

6. A switch in accordance with claim 5, **characterised in that** a manually actuable input circuit (18a) is associated with the control instrument (18; electrical control unit 18').

7. A switch in accordance with any one of claims 1 to 6, **characterised in that** the switch sleeve (17) has means for manual mechanical adjustment.

8. A switch in accordance with any one of claims 1 to 7, **characterised in that** the contact element (switch sleeve 17) connects the battery (15) to the vehicle wiring in the third position (normal position C), connects the jump start terminal (13) at least to the vehicle wiring in the second position (jump start position B) and is held contact free with respect to the battery terminal and to the vehicle wiring terminal (14, 16) in the first position (disconnected position A).

9. A switch in accordance with any one of claims 1 to 8, **characterised in that** the control instrument (18; electronic control unit 18') is made such that at least the level of the battery's own voltage, the polarity at the jump start terminal (13) and the operating status of the vehicle is monitored and
- the battery (15) is disconnected from the vehicle wiring when an undervoltage is present;
- the jump start terminal (13) is only selected when the polarity of the auxiliary voltage delivered to it is correct; and
- the battery (15) is disconnected from the vehicle wiring or connected to it by switching signals of an operating person when the other operating parameters of the vehicle permit this disconnection procedure.

## Revendications

1. Disjoncteur entre une batterie et un réseau de systèmes utilisateurs pour véhicules, **caractérisé par** un interrupteur (10 ; S1, S2) à plusieurs niveaux comprenant une prise pour aide au démarrage (13) avec trois positions de commande dont les autres positions de contact constituent au moins une prise pour batterie (14) et une prise pour réseau d'alimentation de bord (16), tandis que dans la première position de commande les trois prises sont isolées les unes des autres, dans la deuxième position de commande les trois prises sont connectées et dans la troisième position de commande, seules la prise pour réseau d'alimentation de bord et la prise pour batterie sont connectées.

2. Interrupteur selon la revendication 1, **caractérisé en ce qu'**au moins trois zones de contact isolées (11a, 11b, 11c) sont prévues, de même qu'un élément de contact remplissant une fonction de pont, mobile pour au moins trois positions de contact différentes (A, B, C) par rapport aux zones de contact, tandis qu'une première zone de contact (11b) est connectée à la prise pour batterie (14), une deuxième zone de contact (11c) à la prise pour réseau d'alimentation de bord (16) et une troisième zone de contact (11a) à la prise pour aide au démarrage (13).

3. Interrupteur selon la revendication 1 ou 2, **caractérisé en ce qu'**il est prévu un support de contact tubulaire (11) formant les zones de contact isolées (11a, 11b, 11c) les unes des autres se chevauchant axialement et s'étendant axialement, support sur lequel repose une cosse de commande (17) mobile dans la direction axiale, cosse formant un pont de contact et reliant électriquement les zones de contact (11a, 11b, 11c) selon sa propre position.

4. Interrupteur selon l'une des revendications 1 à 3, **caractérisé en ce que** des éléments de réglage électromotorisés, hydrauliques et/ou électromagnétiques sont prévus pour le déplacement de la cosse de commande (17) dans les différentes positions de contact (A, B, C).

5. Interrupteur selon l'une des revendications 1 à 4, **caractérisé en ce qu'**un appareil de commande (18 ; une unité de commande électronique 18') est prévu pour actionner l'élément de réglage (18b) pour déplacer la cosse de commande (17) et surveille grâce à des capteurs (19) l'ensemble des paramètres, des conditions d'exploitation et de commande du véhicule, la tension de la batterie (15) et la tension de la prise pour aide au démarrage (13).

6. Interrupteur selon la revendication 5, **caractérisé en qu'**un circuit de saisie à commande manuelle (18a) est assujetti à l'appareil de commande (18 ; à l'unité de commande électronique 18').

7. Interrupteur selon l'une des revendications 1 à 6, **caractérisé en ce que** la cosse de commande (17) présente des moyens de réglage manuels mécaniques.

8. Interrupteur selon l'une des revendications 1 à 7, **caractérisé en ce que** l'élément de contact (cosse de commande 17) dans la troisième position (position normale C) relie la batterie (15) avec le réseau d'alimentation de bord et dans la deuxième position (position d'aide au démarrage B) relie la prise pour aide au démarrage au moins avec le réseau d'alimentation de bord et dans la première position (position de séparation A) il n'y a pas de contact entre la prise pour batterie et la prise pour réseau d'alimentation de bord (14, 16).

9. Interrupteur selon l'une des revendications 1 à 8, **caractérisé en ce que** l'appareil de commande (18 ; l'unité de commande électronique 18') est constitué de manière à surveiller au moins le degré de tension de sa propre batterie, la polarité au niveau de la prise pour aide au démarrage (13) de même que le mode d'exploitation du véhicule afin
- de déconnecter la batterie (15) du réseau d'alimentation de bord en cas de sous-tension,
- de ne solliciter la prise pour aide au démarrage (13) que si la polarité de la tension externe injectée est correcte et
- de déconnecter ou non la batterie (15) du réseau d'alimentation de bord par le biais des signaux de commande d'un opérateur, si les autres paramètres d'exploitation du véhicule autorise cette opération de déconnexion.
